# EUROPÄISCHE PATENTSCHRIFT

(11) **EP 1 693 096 B1**
(45) Veröffentlichungstag und Bekanntmachung des Hinweises auf die Patenterteilung: **29.04.2009**
(21) Anmeldenummer: 06100725.8
(22) Anmeldetag: 23.01.2006
(51) Int. Cl.: B01D 29/54, B01D 35/153

(54) **Flüssigkeitsfilter**
Liquid filter.
Filtre pour liquides.

(30) Priorität: 15.02.2005 DE 102005007018
(43) Veröffentlichungstag der Anmeldung: 23.08.2006
(73) Patentinhaber: MANN+HUMMEL GmbH, 71638 Ludwigsburg (DE)
(72) Erfinder: Münkel, Karlheinz, 75038, Oberderdingen-Flehingen (DE); Nguyen, Duc Cuong, 30880, Laatzen (DE); Dworatzek, Klemens, 68535, Edingen (DE); Bauder, Ralf, 68775, Ketsch (DE)

(56) Entgegenhaltungen:
- DE-A1- 4 140 140
- US-A- 5 667 699
- US-A1- 2003 196 939

## Beschreibung

Die Erfindung betrifft einen Flüssigkeitsfilter nach dem Oberbegriff des Patentanspruchs 1.

### Stand der Technik

Im Stand der Technik bekannte Flüssigkeitsfilter weisen sehr häufig Rücklaufsperrmembranen und Rücklaufsperrventile auf, um einerseits ein Ausströmen von Flüssigkeit aus dem Filter heraus bei stehender Brennkraftmaschine zu verhindern und andererseits zusätzlich ein Auslaufen der Flüssigkeit aus dem Filter bei einem Wechsel des Filters zu verhindern.

Aus dem US-Patent US 5,667,699 A ist ein Wechselfilter für Flüssigkeiten bekannt, welcher eine Rücklaufsperrmembran umfasst.

Aus dem Dokument US 2003/196,939 A1 ist ebenfalls ein Wechselfilter für Flüssigkeiten bekannt. Dieser weist eine Rücklaufsperrmembran auf, die mit einem Stützkörper in Verbindung steht.

Die DE 41 40 140 A1 zeigt einen Anschraubfilter für Flüssigkeiten, insbesondere Schmierölfilter für Brennkraftmaschinen. Dieser weist eine umlaufende Rücklaufsperrmembran im Bereich des Flüssigkeitseinlasses auf, welche die Dichtfunktion über eine umlaufende Lippe erzielt, welche ein Dichtsitz auf einer Abschlussplatte des Wechselfilters findet. Zentrisch im Inneren des Filtermediums ist weiterhin ein Rücklaufsperrventil, bestehend aus einem Käfig, einer darin angeordneten Feder, und einem durch die Feder mit Federkraft beaufschlagtem Ventilkörper befestigt, wobei der Dichtsitz zwischen Ventilkörper und Käfig hergestellt wird.

Nachteilig ist hierbei jedoch, dass hier für die Funktion des Rücklaufsperrventils und der Rücklaufsperrmembran viele verschiedene Teile gebraucht werden, wobei diese Teile aus unterschiedlichen Materialien hergestellt sind.

Aufgabe der Erfindung besteht darin, einen Flüssigkeitsfilter zu schaffen, welcher eine Verbesserung des bekannten Standes der Technik bietet, dadurch dass die Komplexität des Aufbaus und der Kombination von Rücklaufsperrmembran und Rücklaufsperrventil reduziert wird.

Diese Aufgabe wird durch die Merkmale des Patentanspruchs 1 gelöst.

Der erfindungsgemäße Flüssigkeitsfilter, insbesondere Ölfilter für eine Brennkraftmaschine, weist ein becherförmiges Gehäuse mit einem Flüssigleitseinlass und einem Flüssigkeitsauslass auf, wobei zwischen Ein- und Auslass ein Filterelement dichtend angeordnet ist. Im Bereich der Öffnung des becherförmigen Gehäuses ist eine einstückige Rücklaufsperrmembran angeordnet, wobei durch die Rücklaufsperrmembran der Flüssigkeitseinlass und der Flüssigkeitsauslass verschließbar ist. Hier bestehen folgende Möglichkeiten:
- bei eingesetztem Filter und laufender Brennkraftmaschine sind durch die Rücklaufsperrmembran Ein- und Auslass geöffnet,
- bei stehender Brennkraftmaschine und eingesetztem Filterelement sind entweder Ein- und Auslass verschlossen oder nur der Einlass verschlossen und
- in ausgebautem Zustand sind Ein- und Auslass wiederum verschlossen.

Der Flüssigkeitsfilter kann dabei als Spin-on- Filter, oder auch als Ölmodul ausgeführt sein. Das Gehäuse kann hierbei aus metallischem Werkstoff oder aus Kunststoff bestehen und das Filterelement aus Filterpapier oder einem synthetischen Werkstoff zick-zackförmig gefaltet, gewickelt oder stirnseitig durchströmt mit wechselseitig verschlossenen Kanälen ausgeführt sein. Dadurch ergibt sich eine äußerst platzsparende Ausführung des Rücklaufsperrventils als Membran und der Filter kann dadurch sehr kompakt ausgeführt werden.

Weiterhin ist die Membran sehr viel kostengünstiger und einfacher herzustellen als ein federbelastetes Korbventil. Die Anwendung eines derartigen Filters kann bei Flüssigkeiten im Bereich einer Brennkraftmaschine, wie zum Beispiel Ölen, Kraftstoffen oder Wasser liegen. Es sind jedoch auch Anwendungen ausserhalb von Brennkraftmaschinen, wie zum Beispiel Wasseraufbereitungsanlagen denkbar.

Gemäß einer vorteilhaften Ausgestaltung der Erfindung ist das Filterelement hohlzylindrisch geformt und weist wenigstens im Bereich der Öffnung des becherförmigen Gehäuses eine stirnseitige Endscheibe auf, wobei die Rücklaufsperrmembran mit der stirnseitigen Endscheibe lösbar oder unlösbar verbunden ist. Die Verbindung kann dabei durch kleben, schweißen oder sonstigen aus dem Stand der Technik bekannten unlösbaren Verbindungsmethoden realisiert werden. Dies hat unter anderem den Vorteil, dass die Rücklaufsperrmembran bei jedem Wechsel des Filterelementes mit ausgewechselt wird und sich dadurch über die gesamte Lebensdauer des Flüssigkeitssystems keine Verschlechterung der Rücklaufsperrfunktion ergibt.

Gemäß einer alternativen Ausgestaltungsform der Erfindung ist die Rücklaufsperrmembran korrespondierend mit einer Abschlussplatte des Filters lösbar oder unlösbar verbunden. Als Abschlussplatte kann beispielsweise bei einem Spin-on-Filter der hohlzylindrische Abschluss des becherförmigen Gehäuses verstanden werden, welcher das Verbindungsmittel zum Verbinden mit einem Anschlusskopf aufweist. Weiterhin kann die Abschlussplatte ein Bauteil sein, welches unabhängig von vorhandenen Endscheiben des Filterelementes im Bereich der Verbindung zwischen Filterelement und einem Anschlusskopf angeordnet ist.

Es ist weiterhin alternativ möglich, die Rücklaufsperrmembran korrespondierend mit einem Stützrohr lösbar oder unlösbar zu verbinden. In einer Vielzahl von Anwendungen bietet es sich an bei hohlzylindrisch ausgeführten Filterelementen im Inneren des Filterelementes ein Stützrohr vorzusehen, um ein kollabieren des Filterelementes bei Druckpulsationen zu verhindern. An diesem Stützrohr kann die Rücklaufsperrmembran korrespondierend über ein lösbares oder unlösbares Verbindungsverfahren verbunden sein. Die unlösbaren Verbindungsverfahren wie oben beschrieben gelten selbstverständlich für alle drei alternativen Ausgestaltungsformen. Bei den lösbaren Verbindungsverfahren gelten wiederum für alle drei Ausgestaltungen die Möglichkeiten beispielsweise über ein Anknüpfverfahren oder ein Einklipsen oder Verklemmen die Verbindung zerstörungsfrei lösbar zu gestalten.

Gemäß einervorteilhaften Ausgestaltung der Erfindung ist die Rücklaufsperrmembran aus einem thermoplastischen Elastomer (TPE) gebildet. Durch diese Materialwahl ergibt sich der Vorteil einer flexiblen und dennoch mit einer Eigenelastizität versehenen Membran arbeiten zu können. Diese läßt sich einfach und kostengünstig im Spritzgießverfahren herstellen und den jeweiligen vorliegenden Druckverhältnissen durch eine geringfügige Änderung in der Kunststoffzusammensetzung oder durch konstruktive Maßnahmen anpassen.

Alternativ hierzu kann die Rücklaufsperrmembran auch aus einem Zweikomponentenkunststoff gebildet werden, dabei wird die weichere Komponente für die Dichtfunktion genutzt und die härtere Komponente für die Verbindungskontur mit Endscheibe, Abschlussplatte oder Rücklaufsperrmembran.

Es ist vorteilhaft, wenn die Rücklaufsperrmembran eine kreisförmige Verbindungsplatte aufweist an deren äußeren Rand eine erste Rücklaufsperre angeordnet ist. Weiterhin weist die Verbindungsplatte konzentrisch im radial inneren Bereich die zweite Rücklaufsperre auf. Dabei kann die erste Rücklaufsperre beispielsweise als flexible, elastische unter einem Winkel zur Verbindungsplatte angeordnete Dichtfläche ausgeführt sein, und die zweite Rücklaufsperre aus einer flexiblen Schlauchweiterführung aus der kreisringförmigen Verbindungsplatte heraus, wobei der Schlauch zum Ende hin die Form eines Entenschnabels aufweist und dadurch die Dichtfunktion herstellt.

Gemäß einer weiteren Ausgestaltung der Erfindung weist die Verbindungsplatte die Mittel zur lösbaren Verbindung mit einer Endscheibe des Filterelements der Abschlussplatte oder dem Stützkörper auf. Dies kann beispielsweise über Durchlässe, welche auf spezielle Konturen der Endscheibe, der Abschlussplatte oder des Stützkörpers aufgeknüpft erzielt werden, oder aber auch über beispielsweise über eine Klips- oder Rastverbindung.

In vorteilhafter Weise liegt die erste Rücklaufsperre im Rücklaufsperrzustand, also im dichtenden Zustand korrespondierend dichtend an einer radial äußeren konzentrisch dazu angeordneten Dichtkontur an. Die Dichtkontur kann hier beispielsweise durch eine weitere Endscheibe, eine Dichtkontur aus dem Gehäuse heraus gebildet oder eine Dichtkontur aus einer Abschlussplatte des Filters heraus gebildet sein.

Also wird durch die Verwendung einer einstückigen Rücklaufsperrmembran die Funktion von Rücklaufsperrmembran und Rücklaufsperrventil des Standes des Technik übernommen und stark vereinfacht. Dadurch ergibt sich eine hohe Kostenersparnis sowie eine optimale Bauraumausnutzung.

Diese und weitere Merkmale von bevorzugten Weiterbildungen der Erfindung gehen au-βer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben.

Hierbei zeigt
- Figur 1: eine Schnittdarstellung des Flüssigkeitssystems,
- Figur 2: einen Schnitt von Filterelement und becherförmigem Gehäuse,
- Figur 3: eine isometrische Ansicht von Filterelement und becherförmigem Gehäuse,
- Figur 4: eine einzelisometrische Ansicht des becherförmigen Gehäuses,
- Figur 5: einen Schnitt durch die Außenhülle des Filterelementes,
- Figur 6: eine isometrische Ansicht der Rücklaufsperrmembran,
- Figur 7: zeigt eine Draufsicht auf einen Schnitt im Bereich des Blockiermittels,
- Figur 8: zeigt einen Schnitt durch eine alternative Rücklaufsperrmembran und
- Figur 9: einen Schnitt durch einen Teil eines alternativen Filterelementes.

### Ausführungsformen der Erfindung

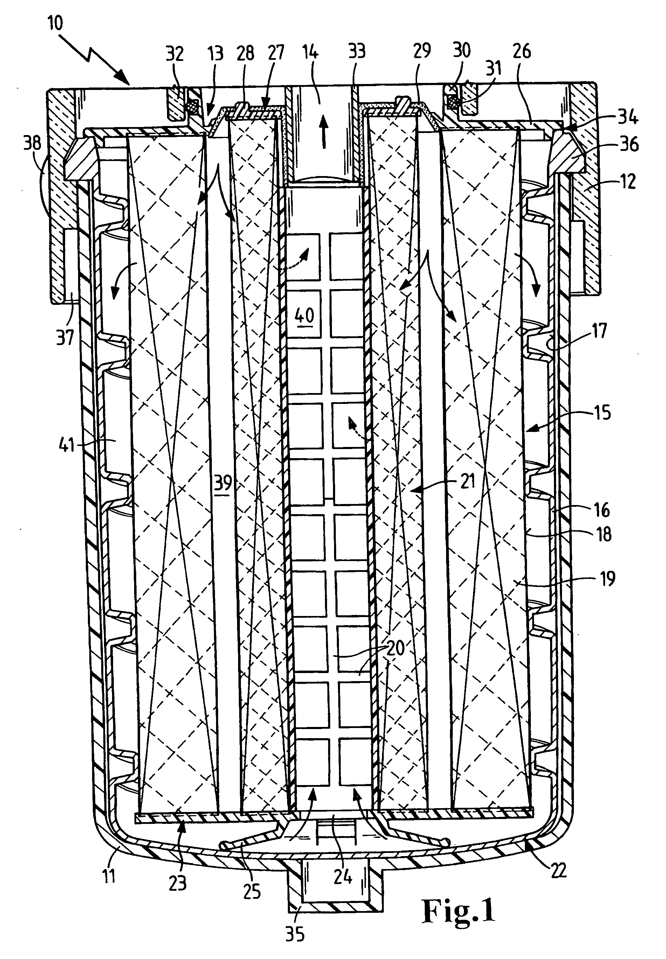

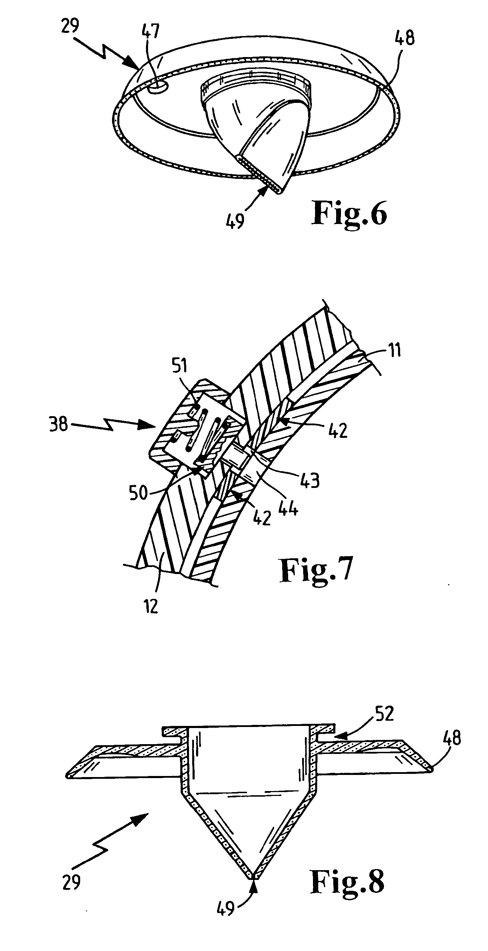

Die Figur 1 zeigt die Schnittdarstellung eines Flüssigkeitsfiltersystems 10, wobei ein becherförmiges Gehäuse 11 mittels einer Bajonettverbindung mit einem Anschlusskopf 12 verbunden ist. Der Anschlusskopf kann hierbei ein separater Anschlussflansch sein, oder auch direkt aus einer Komponente einer Brennkraftmaschine gebildet sein. Das Filtersystem kann verwendet werden für Flüssigkeiten jedweder Art einer Brennkraftmaschine, wie beispielsweise Öle, Kraftstoffe, Hydraulikflüssigkeiten oder auch Kühlmittel. Im Anschlusskopf 12 des Filtersystems 10 sind ein Einlass 13 und eine Auslass 14 angeordnet. Der Auslass 14 ist dabei konzentrisch im Zentrum der Verbindung zwischen becherförmigem Gehäuse 11 und Anschlusskopf 12 angeordnet und der Einlass 13 ist dabei konzentrisch um den Auslass 14 verteilt, ebenfalls im Inneren der Verbindung zwischen becherförmigem Gehäuse 11 und Anschlusskopf 12 angeordnet. Im becherförmigen Gehäuse 11 ist ein Filterelement 15 angeordnet. Das Filterelement 15 weist hierbei einen Kanister 16 auf, welcher das oder die Filtermedien aufnimmt. Der Kanister 16 stützt sich umfangsseitig radial nach außen an einer Innenwandung 17 des becherförmigen Gehäuses 11 ab, und stützt gleichzeitig durch im Kanister 16 angeordnete Nuten eine Außenwandung 18 eines ersten Filterbalges 19 ab. Der Kanister 16 ist flüssigkeitsdicht ausgeführt, und beherbergt zusätzlich die Funktion eines äußeren Stützrohres für einen ersten Filterbalg und einer Abstützung gegen Druckpulsationen am becherförmigen Gehäuse 11. Dadurch kann der Kanister 16 in seiner Materialstärke relativ gering ausgelegt werden, da die eigentliche Abstützung je Druckpulsation am becherförmigen Gehäuse 11 erfolgt. Im Inneren des Filterelementes ist konzentrisch ein Stützrohr 20 angeordnet, um welches sich ein zweiter Filterbalg 21 herum erstreckt. Der erste und der zweite Filterbalg können dabei durch ein zick-zack-förmig gefaltetes Filtermedium, durch ein gewickeltes Filtermedium, einer Kombination daraus oder sonstigem Stand der Technik bekannten Filterbalgen gebildet sein. Im Bereich eines Gehäusebodens 22 des Kanisters 16 werden die beiden Filterbalge durch eine Endscheibe 23, welche kreisringförmig mit einer konzentrisch angeordneten Öffnung 24 ausgeführt ist, gehalten. Einstückig aus der Endscheibe 23 heraus geformt ist ein Federelement 25, welches die Filterbalge am Gehäuseboden 22 abstützt und durch Aufbringung einer axial nach oben wirkenden Federkraft axial festlegt und fixiert. Die radiale Festlegung und Fixierung erfolgt durch die Innenkontur des Kanisters 16. Am gegenüberliegenden Ende der Filterbalge weist der erste Filterbalg 19 einen Endscheibenabschluss 26 auf. Der zweite Filterbalg 21, welcher im Inneren des ersten Filterbalgs 19 angeordnet ist, weist eine geringfügig höhere axiale Erstreckung als der erste Filterbalg 19 auf, und der stirnseitige Abschluss des zweiten Filterbalgs 21 erfolgt über eine Endscheibe 27, welche kreisringförmig geformt ist und konzentrisch einen Durchlass für den Auslass 14 darstellt. Axial in Richtung des Anschlusskopfes 12 hinausragend, weist die Endscheibe 27 eine Einknüpfkontur 28 für eine Rücklaufsperrmembran 29 auf. Die Einknüpfkontur 28 ist dabei über die Endscheibe 27 verteilt und weist mehrere axial in Richtung des Anschlusskopfes 12 herausstehende Stifte oder pilzförmige Konturen auf. Die Rücklaufsperrmembran 29 wird dabei dicht auf die Endscheibe 27 mittels der Einknüpfkontur 28 aufgeknüpft und dichtet bei stehender Brennkraftmaschine einerseits den Flüssigkeitseinlass 13 ab sowie im Wartungsfall den Flüssigkeitsauslass 14. Bevorzugt ist die Rücklaufsperrmembran 29 dabei aus einem weichen thermoplastischen Kunststoff aufgebaut wie beispielsweise ein thermoplastisches Elastomer (TPE). Die Endscheibe 26 weist konzentrisch einen axial herausstehenden Ringkragen 30 auf, wobei im äußeren Umfang eine Nut zur Aufnahme eines Dichtrings 31 angeordnet ist. Der Ringkragen 30 wird beim Verbinden vom becherförmigen Gehäuse 11 und Anschlusskopf 12 in eine Kragenaufnahme 32 des Anschlusskopfes eingeführt, wobei der Dichtring 31 dort zu einer Abdichtung zwischen Ringkragen 30 und Kragenaufnahme 32 dient. Konzentrisch im Inneren der Kragenaufnahme 32 ist ein Auslassrohr 33 angeordnet, welches in die Öffnung der Endscheibe 27 eintaucht und dabei die auslassseitige Rücklaufsperre der Rücklaufsperrmembran 29 öffnet. Zur Abdichtung zwischen Roh- und Reinseite erfolgt die Dichtung hierbei radial zwischen Rücklaufsperrmembran 29 und Auslassrohr 33, welches im Anschlusskopf 12 angeordnet ist. Zur flüssigkeitsdichten Abdichtung des Filterelements 15 sind der Kanister 16 und die Endscheibe 26 über eine Verbindungskontur 34 beispielsweise durch ein Schweiß- oder Klebverfahren unlösbar dichtend miteinander verbunden. Das becherförmige Gehäuse 11 weist zum Lösen im Wartungsfall und zum Verbinden eine Werkzeugaufnahme 35 auf, welche beispielsweise einen Innen- oder Aussensechskant aufweisen kann. Dort wird im Wartungsfall ein Werkzeug angesetzt um das becherförmige Gehäuse 11 vom Anschlusskopf 12 zu trennen oder beide Teile wiederum zu verbinden. Aus dem einen axialen Ende des Kanisters 16 der den über den Umfang verteilt mehrere Teile 36 von Rastelementen in Form einer radial nach aussen stehenden Nase ausgebildet. Diese greifen in Aussparungen des becherförmigen Gehäuses sowie Aussparungen innerhalb einer Rastkontur des becherförmigen Gehäuses 11 welche in den folgenden Figuren gezeigt werden ein. Gleichzeitig dient der Teil 36 der Rastelemente des Kanisters 16 auch als Verbindungskontur 34 zur Endscheibe 26. Der Anschlusskopf 12 weist Führungen 37 auf, in welche Rastkonturen gebildet aus dem Teil 36 der Rastelemente des Kanisters 16 und aus dem becherförmigen Gehäuses 11 eingeschoben und geführt werden können. Im äußeren Berech des Anschlusskopfes 12 ist wenigstens ein Blockiermittel 38 angeordnet, welches eine Verbindung zwischen becherförmigem Gehäuse und Anschlusskopf 12 verhindert, wenn kein Filterelement 15 oder ein falsches Filterelement eingesetzt ist. Dabei greift dann das Blockiermittel 38 in eine Aussparung 44 des becherförmigen Gehäuses 11 ein und verhindert so ein Schließen des Bajonettverschlusses. Die Funktion des Blockiermittels 38 ist in der Figur 7 dargestellt.

Die zu reinigende Flüssigkeit fließt durch den Einlass 13 des Anschlusskopfes 12 in einen Zwischenraum 39 zwischen den beiden Filterbalgen 19, 21, durchströmt den inneren zweiten Filterbalg 21 in einem reinseitigen Abflussraum 40 innerhalb des Stützrohrs 20 um dann durch die durch das Auslassrohr 33 geöffnete Rücklaufsperrmembran 29 durch den reinseitigen Auslass 14 zurück in das System zu strömen. Ein weiterer Teil der noch nicht gereinigten Flüssigkeit durchströmt ausgehend vom Zwischenraum 39 den äusseren ersten Filterbalg 19 radial nach aussen in ein kanisterseitiges Volumen, in dem es nach unten bis zum Gehäuseboden 22 strömt und von dort aus auch durch den reinseitigen Auslass 14 in das System zurückgeführt werden kann.

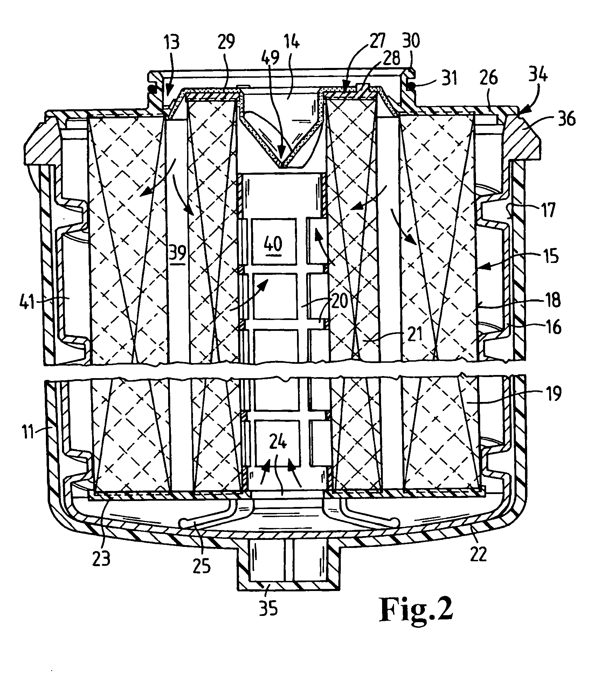

In Figur 2 ist die Kombination aus Filterelement 15 und becherförmigem Gehäuse 11 im Schnitt dargestellt. Der vorherigen Figur entsprechende Bauteile sind mit den gleichen Bezugszeichen versehen. Hier ist zu erkennen, dass bei vom Anschlusskopf 12 gelösten becherförmigen Gehäuse 11 inklusive Filterelement 15 die Rücklaufsperrmembran 29 im Bereich des reinseitigen Auslasses 14 durch das nicht mehr vorhandene Auslassrohr 33 in die Ursprungsform zurückgekehrt ist und ein Ausfließen der im Filterelement 15 gespeicherten Flüssigkeit verhindert. Durch die Ausführung der Rücklaufsperrmembran 29 als thermoplastisches Elastomer kann durch die Kontur eine Rückstellkraft innerhalb der Sperrmembran hervorgerufen werden, welche sich in einer auslassseitigen Dichtung, welche allein durch die Rückstellkraft dicht geschlossen ist, äußert.

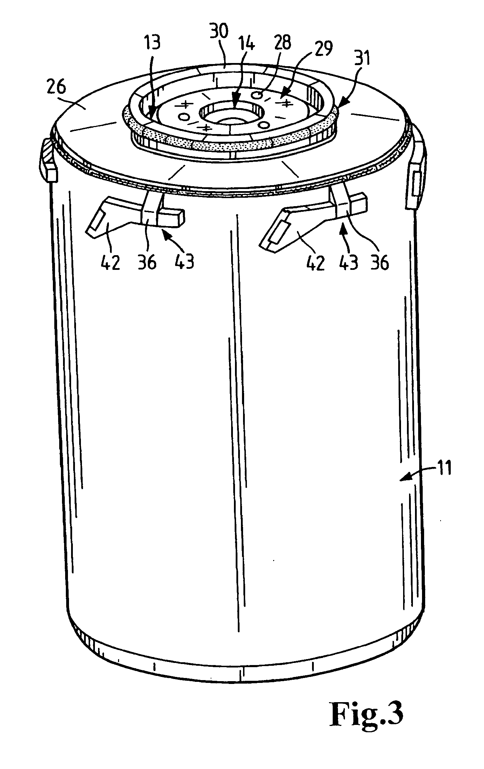

Die Figur 3 zeigt eine isometrische Ansicht von becherförmigem Gehäuse 11 und darin angeordneten Filterelement 15. Den vorherigen Figuren entsprechende Bauteile sind mit en gleichen Bezugszeichen versehen. Hier sind deutlich die mehreren Einknüpfkonturen 28 der Endscheibe 27 für die Rücklaufsperrmembran 29 zu erkennen. Desweiteren am offenen axialen Ende des becherförmigen Gehäuses 11 umfangsseitig mehrere Rastkonturen 42 für die Herstellung des Bajonettverschlusses innerhalb des Filtersystems 10 gleichmäßig verteilt angeordnet. In einer Aussparung 43 der Rastkontur 42 ist der filterelementsseitige Teil 36 des Rastelementes bei korrekt installiertem Filterelement 15 angeordnet, wodurch sich eine Komplettierung der Rastkontur 42 ergibt. Bei nicht eingesetztem Filterelement 15 oder einem nicht hierzu passenden Filterelement bleibt die Aussparung 43 innerhalb der Rastkontur 42 frei, wodurch ein bajonettförmiges Verbinden zwischen becherförmigem Gehäuse 11 und Anschlusskopf 12 durch das Blockiermittel 38 verhindert wird. Das Blockiermittel 38 greift dann in die Aussparung 43 ein und verhindert ein Verdrehen des becherförmigen Gehäuses 11 relativ zum Anschlusskopf 12.

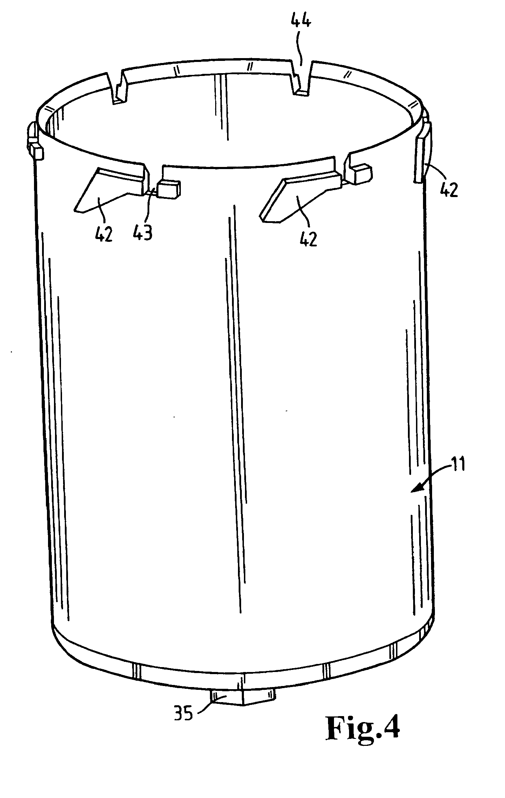

Die Figur 4 zeigt das becherförmige Gehäuse 11 in isometrischer Ansicht. Das becherförmige Gehäuse 11 weist zum Einführen des Filterelements 15 über den Umfang verteilte axial vom offenen Ende des becherförmigen Gehäuse 11 ausgehende Aussparungen 44 auf, welche in den Aussparungen 43 für die Rastkontur enden. So wird das Filterelement 15 mit den Teilen 36 der Rastelemente in die Aussparung 44 eingesetzt und bis zur Komplettierung der Rastkontur 42 bis zum Ende der Aussparung 43 der Rastkontur eingesetzt. Erst dadurch ergibt sich eine Vervollständigung der Rastkonturen 42 zur Verbindung mit dem Anschlusskopf 12.

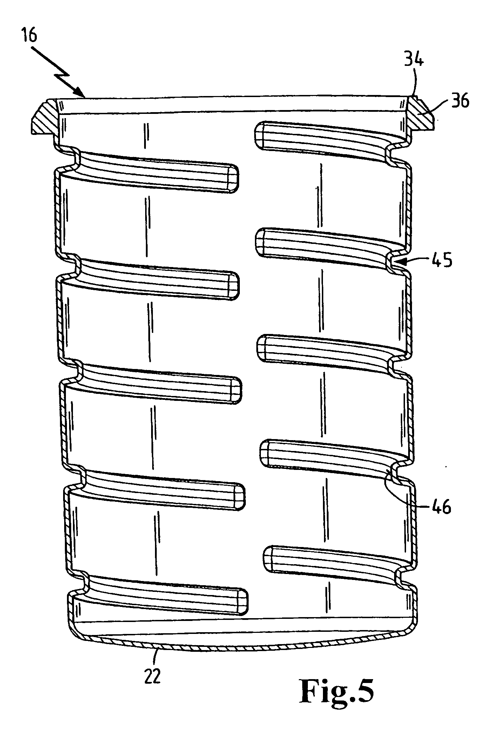

Die Figur 5 zeigt einen Schnitt durch den Kanister 16 welcher die Aussenhülle des Filterelements 15 darstellt. Über die Mantelfläche des Kanisters 16 verteilt, sind mehrere Nuten 45, welche im Inneren des Kanisters 16 eine Anlagefläche 46 für den ersten Filterbalg 19 darstellen. Da die Nuten 45 nicht durchgehend im inneren Umfang des Kanisters 16 angeordnet sind, ergibt sich so eine einfache Möglichkeit die Flüssigkeit, welche gereinigt den ersten Filterbalg 19 durchströmt, über den Gehäuse bzw. Kanisterboden 22 dem reinseitigen Abflussraum 40 zuzuführen. In den Kanister 16 wird dann der Rest des oben beschriebenen Filterelementes eingeführt und an der Verbindungskontur 34 mit dem Kanister 16 verbunden. Dadurch entsteht ein flüssigkeitsdichtes System welches im Wartungsfall dafür sorgt, dass eine Verschmutzung der Umgebung und der Umwelt sowie schmutzige Filter des Wartenden vermieden werden können. Der axiale Abschluss des Kanisters 16 im Bereich des offenen Endes wird wiederum durch den Teil 36 der Rasteelemente gebildet, welcher in die Aussparung 43 der Rastkontur 42 des becherförmigen Gehäuses 11 eingreift.

Die Figur 6 zeigt die Rücklaufsperrmembran einer isometrischen Ansicht. Den vorherigen Figuren entsprechende Bauteile sind mit en gleichen Bezugszeichen versehen. Die Rücklaufsperrmembran ist im wesentlichen plattenförmig aufgebaut, bevorzugt aus einem thermoplastischen Elastomer hergestellt und weist im plattenförmigen Teil mehrere Öffnungen 47 zur Herstellung der Knüpfverbindung mit der Endscheibe 27 über die Anknüpfkontur 28 auf. Im äußeren Bereich weist die Rücklaufsperrmembran 29 eine zum plattenförmigen Bereich gewinkelte Dichtfläche 48 für den Einlassbereich des Filtersystems 10 auf, welcher durch die Flexibilität des Materials bei Einströmen der zu reinigenden Flüssigkeit sich von einer Dichtfläche in der Abschlussendscheibe 26 abhebt und dadurch ein Einströmen der Flüssigkeit gewährleistet. Bei stehender Brennkraftmaschine, das heißt wenn kein Flüssigkeitsdruck an der Rücklaufsperrmembran anliegt, verschließt die Dichtfläche 48 den Einlass 13 durch ihre Elastizität. Konzentrisch im Inneren der Rücklaufsperrmembran 29 ist eine Art Dichtventil 49 zur Abdichtung des Auslasses bei Herausnahme des Filterelementes aus dem Flüssigkeitskreislauf angeordnet. Die Auslassdichtung 49 weist eine Art Entenschnabel auf, welcher im eingesetzten Zustand durch das Auslassrohr 33 aus dem Anschlusskopf 12 heraus geöffnet wird, welche sich weiterhin bei Herausnahme des Auslassrohrs 33 durch die eigene Elastizität wieder schließt. Hier sind also Rücklaufsperrmembran und Rücklaufsperrventil einstückig in einem Bauteil realisiert.

Die Figur 7 zeigt eine Möglichkeit der Anwendung des Blockiermittels 38. Den vorherigen Figuren entsprechende Bauteile sind mit en gleichen Bezugszeichen versehen. In der Figur 7 ist eine Draufsicht eines Schnitts im Bereich des Blockiermittels 38 dargestellt. Das Blockiermittel 38 ist im Anschlusskopf 12 angeordnet, wobei im Anschlusskopf 12 ein Verriegelungsstift 50 sowie ein Federmittel 51 angeordnet ist derart, dass der Verriegelungsstift 50 axial gegen die Kraft des Federmittels 51 beweglich ist, und bei einem Zusammenführen von becherförmigem Gehäuse 11 und Anschlusskopf 12 bei nicht vorhandenem oder vorgesehenem Filterelement 15 durch die Kraft des Federmittels 51 in die Aussparung der Rastkontur 43 einrastet und so ein Verdrehen zur Herstellung der Bajonettverbindung verhindert. Bei korrekt eingesetztem Filterelement 15 sind die Aussparungen 43 und 44 durch den Teil 36 des Rastelementes des Filterelementes 15 ausgefüllt und komplettieren somit die Rastkontur 42 wodurch der Verriegelungsstift 50 gegen die Kraft des Federmittels 51 in den Anschlusskopf 12 hineingedrückt wird und somit ein Verdrehen von becherförmigem Gehäuse 11 gegenüber Anschlusskopf 12 möglich ist, wodurch die Bajonettverbindung hergestellt werden kann.

Figur 8 zeigt einen Schnitt durch eine alternative Rücklaufsperrmembran 29. Den vorherigen Figuren entsprechende Bauteile sind mit den gleichen Bezugszeichen versehen. Hier wird die Befestigung mit dem Filterelement in alternativer Weise über eine umlaufende, konzentrisch zur Einlassdichtfläche 48 angeordnete Ringnut 52 realisiert. Diese dient dann zur Aufnahme einer hier nicht dargestellten Endscheibe, wobei diese Anbindung in der folgenden Figur erläutert wird.

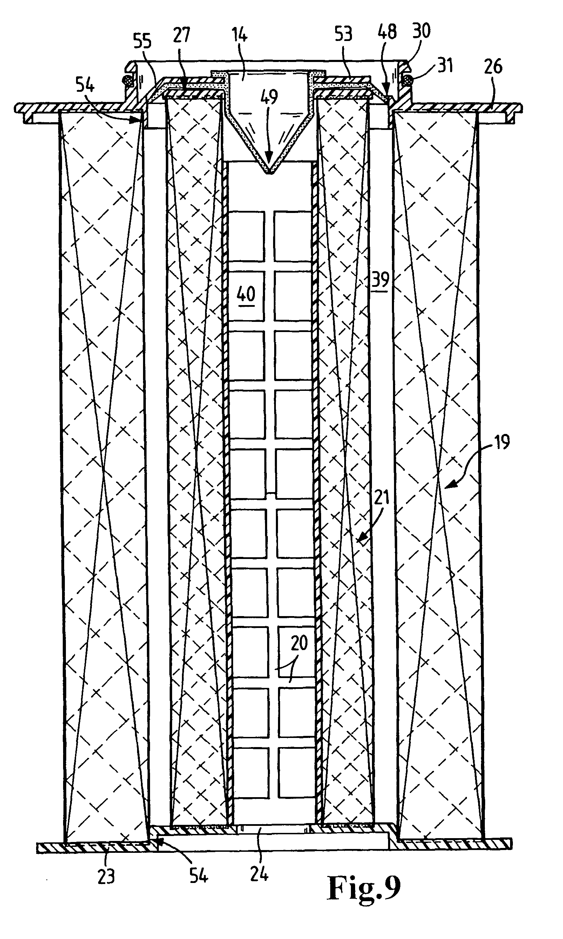

Figur 9 zeigt einen Schnitt durch einen Teil eines alternativen Filterelementes unter Einsatz der Rücklaufsperrmembran 29. Den vorherigen Figuren entsprechende Bauteile sind mit den gleichen Bezugszeichen versehen. Hierbei ist der innere Filterbalg 21 über ein Spiegelschweißverfahren mit der unteren Endscheibe 23 und der oberen Endscheibe 27 dichtend verbunden. Der Endscheibenabschluss 26 weist konzentrisch einen Befestigungsring 53 auf, über den die Rücklaufsperrmembran 29 mittels des Befestigungsringes 53 gehalten wird. Der Befestigungsring 53 ist bevorzugt einstückig mit dem Endscheibenabschluss 26 über Verbindungsstege 55 verbunden, wobei die Verbindungsstege 55 umlaufend um den Auslass 14 angeordnet sind. Endscheibenabschluss 26 und Endscheibe 23 weisen jeweils Dichtsitze 54 für den äußeren Filterbalg 19 auf und fixieren diesen zusätzlich. Der hier nicht dargestellte Kannister 16 kann analog zu den vorherigen Ausführungen ausgeführt sein und verbindet so die beiden Endscheiben 23 und 26.

## Patentansprüche

1. Flüssigkeitsfilter, insbesondere Ölfilter für eine Brennkraftmaschine, aufweisend ein becherförmiges Gehäuse mit einem Flüssigkeitseinlass und einem Flüssigkeitsauslass, wobei zwischen Ein- und Auslass ein Filterelement dichtend angeordnet ist, **dadurch gekennzeichnet, dass** im Bereich der Öffnung des becherförmigen Gehäuses eine einstückige Rücklaufsperrmembran angeordnet ist, wobei durch die Rück-laufsperrmembran der Flüssigkeitseinlass und der Flüssigkeitsauslass verschließbar ist.

2. Flüssigkeitsfilter nach Anspruch 1, **dadurch gekennzeichnet, dass** das Filterelement hohlzylindrisch geformt ist und wenigstens im Bereich der Öffnung des becherförmigen Gehäuses eine stirnseitige Endscheibe aufweist und dass die Rücklaufsperrmembran mit der Endscheibe lösbar oder unlösbar verbunden ist.

3. Flüssigkeitsfilter nach Anspruch 1, **dadurch gekennzeichnet, dass** die Rücklaufsperrmembran korrespondierend mit einer Abschlussplatte des Filters lösbar oder unlösbar verbunden ist.

4. Flüssigkeitsfilter nach Anspruch 1, **dadurch gekennzeichnet, dass** die Rücklaufspernmembran korrespondierend mit einem Stützrohr des Filters lösbar oder unlösbar verbunden ist.

5. Flüssigkeitsfilter, nach einem der vorherigen Ansprüche, **dadurch gekennzeichnet, dass** die Rücklaufsperrmembran aus einem thermoplastischen Kunststoff, insbesondere einem TPE, gebildet ist.

6. Flüssigkeitsfilter nach einem der Ansprüche 1 bis 4, **dadurch gekennzeichnet, dass** die Rücklaufsperrmembran aus einem Zweikomponentenkunststoff gebildet ist.

7. Flüssigkeitsfilter nach einem der vorhergehenden Ansprüche, **dadurch gekennzeichnet, dass** die Rücklaufsperrmembran eine kreisringförmige Verbindungsplatte aufweist an deren äußeren Rand eine erste Rücklaufsperre angeordnet ist und wobei die Verbindungsplatte konzentrisch im radial inneren Bereich eine zweite Rücklaufsperre aufweist.

8. Flüssigkeitsfilter nach Anspruch 7, **dadurch gekennzeichnet, dass** die Verbindungsplatte Mittel zur lösbaren Verbindung mit einer Endscheibe des Filterelements oder einer Abschlussplatte aufweist.

9. Flüssigkeitsfilter nach einem der Ansprüche 7 bis 8, **dadurch gekennzeichnet, dass** die erste Rücklaufsperre im Rücklaufsperrzustand korrespondierend dichtend an einer radial äußeren konzentrisch dazu angeordneten Dichtkontur anliegt.

## Claims

1. Liquid filter, particularly an oil filter for an internal combustion engine, featuring a cup-shaped housing with a liquid intake and a liquid outlet, with a filter element arranged sealingly between the intake and the outlet, **characterized in that** in the area of the opening of the cup-shaped housing a one-piece return stop diaphragm is located, the liquid intake and the liquid outlet being closable by the return stop diaphragm.

2. Liquid filter according to claim 1, **characterized in that** the filter element is designed as a hollow cylinder and features at least in the area of the opening of the cup-shaped housing a frontal end plate and that the return stop diaphragm is connected detachably or non-detachably with the end plate.

3. Liquid filter according to claim 1, **characterized in that** the return stop diaphragm is correspondingly connected detachably or non-detachably with an end plate of the filter.

4. Liquid filter according to claim 1, **characterized in that t**he return stop diaphragm is correspondingly connected detachably or non-detachably with a support tube of the filter.

5. Liquid filter according to one of the above claims, **characterized in that** the return stop diaphragm is made of thermoplastic in particular TPE.

6. Liquid filter according to one of the claims 1 to 4, **characterized in that** the return stop diaphragm is made of a two-component plastic.

7. Liquid filter according to one of the above claims, **characterized in that** the return stop diaphragm features a circular ring-shaped connecting plate, at the outer edge of which a first return stop is located and the connecting plate featuring concentrically a second return stop in the radial inner area.

8. Liquid filter according to claim 7, **characterized in that** the connecting plate features means for a detachable connection with an end plate of the filter element or a closing plate.

9. Liquid filter according to one of the claims 7 to 8, **characterized in that** the first return stop in return stop condition correspondingly and sealingly abuts a radial outer sealing contour arranged concentrically to it.

## Revendications

1. Filtre à liquide, en particulier filtre à huile pour un moteur à combustion interne, présentant un boîtier en forme de coupe avec une entrée de liquide et une sortie de liquide, un élément filtrant étant disposé de façon étanche entre l'entrée et la sortie, **caractérisé en ce qu'**une membrane anti-retour monobloc est située dans la zone de l'ouverture du boîtier en forme de coupe, cette membrane anti-retour permettant d'obturer l'entrée du liquide et la sortie du liquide.

2. Filtre à liquide selon la revendication 1, **caractérisé en ce que** l'élément filtrant est réalisé en forme de cylindre creux et présente au moins dans la zone de l'ouverture du boîtier en forme de coupe une plaque d'extrémité frontale et que la membrane anti-retour est reliée à la plaque d'extrémité de manière détachable ou fixe.

3. Filtre à liquide selon la revendication 1, **caractérisé en ce que** la membrane anti-retour est reliée de façon correspondante à une plaque d'obturation du filtre de manière détachable ou fixe.

4. Filtre à liquide selon la revendication 1, **caractérisé en ce que** la membrane anti-retour est reliée de façon correspondante à un tube de support du filtre de manière détachable ou fixe.

5. Filtre à liquide selon l'une des revendications précédentes, **caractérisé en ce que** la membrane anti-retour est réalisée dans une matière synthétique thermoplastique, en particulier dans un TPE.

6. Filtre à liquide selon l'une des revendications 1 à 4, **caractérisé en ce que** la membrane anti-retour est réalisée dans une matière synthétique bi-composants.

7. Filtre à liquide selon l'une des revendications précédentes, **caractérisé en ce que** la membrane anti-retour présente une plaque de jonction annulaire sur le bord extérieur de laquelle est disposé un premier clapet anti-retour et la plaque de jonction présentant concentriquement un deuxième clapet anti-retour dans la zone intérieure radiale.

8. Filtre à liquide selon la revendication 7, **caractérisé en ce que** la plaque de jonction présente des éléments assurant une liaison détachable avec la plaque d'extrémité de l'élément filtrant ou une plaque d'obturation.

9. Filtre à liquide selon l'une des revendications 7 ou 8, **caractérisé en ce que** le premier dispositif anti-retour, en position anti-retour, est appliqué de façon correspondante et étanche sur un contour d'étanchéité radial extérieur disposé de façon concentrique par rapport à ce dispositif.
